# EUROPEAN PATENT APPLICATION

(11) **EP 2 865 522 A1**
(43) Date of publication of application: **29.04.2015**
(21) Application number: 13809613.6
(22) Date of filing: 13.05.2013
(51) Int. Cl.: B32B 27/30, B32B 27/28, B65D 65/40, B65D 75/34

(54) **LAMINATE, AND PACKAGE AND PRESS-THROUGH PACK USING SAME**

(30) Priority: 26.06.2012 JP 2012143264
(71) Applicant: The Nippon Synthetic Chemical Industry Co., Ltd., Osaka-shi, Osaka 530-0018 (JP)
(72) Inventor: MIZUTANI Tomoyoshi, Osaka-shi Osaka 530-0018 (JP)
(74) Representative: Kuhnen & Wacker
(86) International application number: PCT/JP2013/063282
(87) International publication number: WO 2014/002623

(57) **Abstract**

A laminate having a greater economic benefit and an excellent gas barrier property against water vapor and other gases, and a packaging material and a press-through pack employing the laminate are provided. The laminate has a layered structure including: (A) a base film; (B) a stretched vinyl alcohol resin film; and (C) a fluororesin film.

## Description

### TECHNICAL FIELD

The present invention relates to a laminate suitable for press-through pack (PTP) packages in the field of packages for pharmaceuticals, cosmetics and food, particularly, for packaging pills. More specifically, the invention relates to a laminate excellent in gas barrier property against water vapor and other gases, and to a packaging material and a press-through pack employing the same.

### BACKGROUND ART

In the field of packages for pharmaceuticals, cosmetics and food, pills such as tablets and capsules are packaged in a PTP package form.

PTP packages are produced by employing a film made of a hard polyvinyl chloride resin or a polypropylene resin as a base film, forming the base film into a packaging material having pockets, putting pills (tablets, capsules or the like) into the pockets, and sealing the packaging material with an aluminum foil cover material. Such PTP packages are widely available.

Where a moisture barrier property is required for the pills, a laminate film prepared by laminating the base film made of the hard polyvinyl chloride resin or the polypropylene resin with a polyvinylidene chloride resin (PVDC) film (see, for example, PLT1 and PLT2) or with a polychlorotrifluoroethylene (PCTFE) film (see, for example, PLT3) is used.

### CITATION LIST

### PATENT LITERATURE

PLT1: JP-A-2005-112426
PLT2: JP-A-2005-59455
PLT3: JP-A-2009-511310

### SUMMARY OF INVENTION

However, the laminate films disclosed in PLT1 and PLT2 are unsatisfactory in gas barrier property against water vapor and other gases. A PTP package employing a fluororesin film such as of PCTFE is contemplated. In order to impart the PTP package with an excellent gas barrier property, the fluororesin film desirably has a thickness of not less than 50 µm.

However, the fluororesin film per se is very expensive, so that a PTP packaging material is also expensive. Accordingly, there is a demand for developing a laminate which includes a thinner fluororesin film and yet is comparable to or better than the prior-art laminates in gas barrier property.

With this background, it is an object of the present invention to provide a laminate which has a greater economic benefit and an excellent gas barrier property against water vapor and other gases, and to provide a packaging material and a press-through pack employing the laminate.

In view of the foregoing, the inventor of the present invention conducted intensive studies and, as a result, found that a laminate produced by providing a stretched vinyl alcohol resin film between a base film and a fluororesin film is excellent in gas barrier property against water vapor and other gases even if the fluororesin film has a reduced thickness.

According to an inventive aspect, there is provided a laminate having a layered structure including: (A) a base film; (B) a stretched vinyl alcohol resin film; and (C) a fluororesin film.

The present invention also provides a packaging material and a press-through pack employing the laminate.

The inventive laminate has a highly effective gas barrier property against water vapor and other gases, and the packaging material and the press-through pack employing the laminate are very useful.

### DESCRIPTION OF EMBODIMENTS

The present invention will hereinafter be described in detail.

The inventive laminate has a layered structure including: (A) a base film; (B) a stretched vinyl alcohol resin film; and (C) a fluororesin film.

The base film (A) for use in the present invention is simply required to be a synthetic resin film, and examples of the synthetic resin film include thermoplastic resin films, and polyolefin films such as polypropylene films, among which the thermoplastic resin films are preferred for formability. Polyvinyl chloride films are more preferred, and hard polyvinyl chloride films are particularly preferred.

The base film (A) generally has a thickness (Ta) of 50 to 400 µm, particularly preferably 80 to 360 µm, more preferably 100 to 320 µm. If the thickness (Ta) is excessively small, the base film is liable to be torn and cracked. If the thickness (Ta) is excessively large, the base film is liable to have an excessively high hardness, so that the resulting formed product fails to properly function.

The stretched vinyl alcohol resin film (B) for use in the present invention is a film prepared by uniaxially or biaxially stretching a vinyl alcohol resin film formed from a resin having a vinyl alcohol structural unit (hereinafter referred to as "vinyl alcohol resin").

The vinyl alcohol resin is simply required to have a vinyl alcohol unit provided by saponifying a vinyl ester unit preferably at a saponification degree of not less than 90 mol%, particularly preferably not less than 95 mol%, more preferably not less than 99 mol%. Examples of the vinyl alcohol resin include a polyvinyl alcohol (hereinafter sometimes abbreviated as "PVA") resin, and an ethylene-vinyl alcohol (hereinafter sometimes abbreviated as "EVOH") resin. Particularly, the PVA resin is preferred for the gas barrier property against water vapor and other gases.

The PVA resin and the EVOH resin will be described in turn below.

The PVA resin may be an unmodified PVA or a modified PVA.

The unmodified PVA may be produced by homopolymerizing vinyl acetate and saponifying the resulting homopolymer. On the other hand, the modified PVA may be a copolymerization-modified PVA or an after-modified PVA, and the modification degree is generally less than 10 mol%.

The copolymerization-modified PVA may be produced by copolymerizing vinyl acetate and an unsaturated monomer copolymerizable with vinyl acetate, and then saponifying the resulting copolymer.

Examples of the unsaturated monomer copolymerizable with vinyl acetate include: olefins such as ethylene, propylene, isobutylene, α-octene, α-dodecene and α-octadecene; hydroxyl-containing α-olefins such as 3-buten-1-ol, 4-penten-1-ol and 5-hexen-1-ol, and acylation products and other derivatives of these hydroxyl-containing α-olefins; unsaturated acids such as acrylic acid, methacrylic acid, crotonic acid, maleic acid, maleic anhydride, itaconic acid and undecylenic acid, and salts, monoesters and dialkyl esters of these unsaturated acids; nitriles such as acrylonitrile and methacrylonitrile; amides such as diacetone acrylamide, acrylamide and methacrylamide; olefin sulfonic acids such as ethylene sulfonic acid, allyl sulfonic acid and methallyl sulfonic acid, and salts of these olefin sulfonic acids; vinyl compounds such as alkyl vinyl ethers, dimethyl allyl vinyl ketone, N-vinylpyrrolidone, vinyl chloride, vinyl ethylene carbonate, 2,2-dialkyl-4-vinyl-1,3-dioxolanes, glycerin monoallyl ether and 3,4-diacetoxy-1-butene; substituted vinyl acetates such as isopropenyl acetate, 1-methoxyvinyl acetate; and vinylidene chloride, 1,4-diacetoxy-2-butene and vinylene carbonate.

A PVA having a 1,2-diol bond at its side chain may be used as the copolymerization-modified PVA. The PVA having the 1,2-diol at its side chain is prepared, for example, by saponifying a copolymer of vinyl acetate and 3,4-diacetoxy-1-butene, by saponifying and decarbonating a copolymer of vinyl acetate and vinyl ethylene carbonate, by ketonizing and deketalizing a copolymer of vinyl acetate and a 2,2-dialkyl-4-vinyl-1,3-dioxolane, or by ketonizing a copolymer of vinyl acetate and glycerin monoallyl ether.

Next, the after-modified PVA may be produced by after-modifying an unmodified PVA. Examples of the after-modifying method include esterification of the unmodified PVA with acetoacetic acid, acetalization of the unmodified PVA, urethanization of the unmodified PVA, etherification of the unmodified PVA, grafting of the unmodified PVA, esterification of the unmodified PVA with phosphoric acid and oxyalkylenation of the unmodified PVA.

In the present invention, the PVA resin preferably has an average polymerization degree of not less than 1100 and an average saponification degree of not less than 90 mol%.

The average polymerization degree is more preferably 1100 to 4000, particularly preferably 1200 to 2600. If the average polymerization degree is excessively low, the resulting film is liable to have a reduced mechanical strength. If the average polymerization degree is excessively high, the processability for the formation of the film and the stretching of the film is liable to be deteriorated.

The average saponification degree is more preferably not less than 95 mol%, particularly preferably not less than 99 mol%. The upper limit of the average saponification degree is 100 mol%, preferably 99.9 mol%. If the average saponification degree is excessively low, the water resistance is reduced, so that the gas barrier property is liable to be significantly changed due to moisture. Therefore, a PVA resin having a higher average saponification degree is preferably selected.

The average polymerization degree and the average saponification degree are measured in conformity with JIS K6726.

The PVA resin preferably has a viscosity of 2.5 to 100 mPa·s (at 20°C), more preferably 2.5 to 70 mPa·s (at 20°C), particularly preferably 5 to 60 mPa·s (at 20°C) , as measured in the form of a 4 wt% aqueous solution thereof. If the viscosity is excessively low, mechanical properties such as film strength are liable to be impaired. If the viscosity is excessively high, the film formability is liable to be impaired.

The viscosity is measured in conformity with JIS K6726.

These PVA resins may be used either alone or in combination as a mixture.

Next, the EVOH resin will be described.

The EVOH resin is prepared by saponifying a copolymer of ethylene and a vinyl ester. A typical example of the vinyl ester is vinyl acetate. Fatty acid vinyl esters (vinyl propionate, vinyl pivalate and the like) are also usable.

The EVOH resin may contain 0.0002 to 0.2 mol% of a vinyl silane compound as a comonomer for improvement in stability thereof during heat-melting thereof. Examples of the vinyl silane compound include vinyltrimethoxysilane, vinyltriethoxysilane, vinyltris(β-methoxyethoxy)silane and γ-methacryloxypropylmethoxysilane. Particularly, vinyltrimethoxysilane and vinyltriethoxysilane are advantageously employed. As long as the object of the present invention is not impaired, other copolymerizable monomer, for example, propylene, butylene, an unsaturated carboxylic acid or an ester thereof such as (meth)acrylic acid, methyl (meth)acrylate or ethyl (meth)acrylate, or a vinyl pyrrolidone such as N-vinyl pyrrolidone may be copolymerized for the EVOH resin.

Here, (meth)acrylic acid means acrylic acid or methacrylic acid.

The EVOH resin generally has an ethylene content of 10 to 60 mol%. For proper stretchability, the ethylene content is preferably not less than 15 mol%, particularly preferably not less than 25 mol%. For gas barrier property, the ethylene content is preferably not greater than 55 mol%, particularly preferably not greater than 50 mol%. If the ethylene content is excessively low, the melt-formability is liable to be impaired. If the ethylene content is excessively high, the gas barrier property is liable to be impaired.

The ethylene content of the EVOH resin may be determined by a nuclear magnetic resonance (NMR) method.

The EVOH resin preferably has an average saponification degree of not less than 90%, more preferably not less than 95%, further more preferably not less than 99%. If the average saponification degree is excessively low, the gas barrier property at higher humidities tends to be impaired. The upper limit of the average saponification degree is 100 mol%, preferably 99.9 mol%.

Where the EVOH resin is an EVOH resin blend including two or more EVOH resins having different average saponification degrees, the average saponification degree is determined based on a blending weight ratio.

As long as the object of the present invention is not impaired, a boron compound may be blended in the EVOH resin for improvement in the stability of the EVOH resin during the heat-melting of the EVOH resin. Examples of the boron compound include boric acids, boric esters, boric salts and hydrogenated boron compounds. Specific examples of boric acids include orthoboric acid, metaboric acid and tetraboric acid. Specific examples of the boric esters include triethyl borate and trimethyl borate. Specific examples of the boric salts include alkali metal salts of the baric acids, alkali earth metal salts of the boric acids and borax. Among these compounds, orthoboric acid (hereinafter sometimes referred to simply as "boric acid") is preferred.

Where the boron compound is blended in the EVOH resin, the content of the boron compound is preferably 20 to 2000 ppm, more preferably 50 to 1000 ppm, on a boron element basis. Where the boron compound is blended in this range, it is possible to suppress variations in torque occurring in the resulting EVOH resin during the heat-melting of the EVOH resin. If the content of the boron compound is excessively low, the effect of the addition of the boron compound is insufficient. If the content of the boron compound is excessively high, the resulting EVOH resin is likely to be gelatinized, resulting in forming failures.

The EVOH resin generally has a melt flow rate (MFR) of 1 to 50 g/10 minutes, preferably 3 to 40 g/10 minutes, more preferably 5 to 30 g/10 minutes (at 230°C with a load of 2160 g). These EVOH resins may be used either alone or in combination as a mixture.

Next, a production method for the stretched vinyl alcohol resin film (B) for use in the present invention will be described.

The stretched vinyl alcohol resin film (B) is produced by forming a film from the vinyl alcohol resin and stretching the resulting film.

Examples of the film forming method include a flow-casting method in which a vinyl alcohol resin solution is flow-cast on a metal surface of a drum, an endless belt or the like to form a film, and a melt-forming method in which the vinyl alcohol resin is melted and extruded by an extruder.

In the stretching process, the film may be uniaxially or biaxially stretched. For more uniform film formation, the biaxial stretching process is more preferred than the uniaxial stretching process. The stretching process may be performed in a common manner.

The biaxial stretching process may be a simultaneous biaxial stretching process or a sequential biaxial stretching process. For more flexible stretching operation, the sequential biaxial stretching process is preferred. In the sequential biaxial stretching process, it is particularly preferred to perform a longitudinal uniaxial stretching step and then a transverse uniaxial stretching step.

The stretching ratio for the uniaxial stretching process is preferably 1.5 to 4.5, particularly preferably 1.5 to 4.0, more preferably 2.0 to 3.5.

In the present invention, it is particularly preferred to use a biaxially stretched PVA film or a biaxially stretched EVOH film as the stretched vinyl alcohol resin film (B), and more preferred to use the biaxially stretched PVA film.

A method for producing the biaxially stretched PVA film and a method for producing a biaxially stretched EVOH film will be described in turn below.

An exemplary method for producing the biaxially stretched PVA film will be described.

First, a film formation solution is prepared by using the PVA resin. More specifically, a PVA resin/water composition having a PVA resin concentration of 5 to 70 wt%, preferably 10 to 60 wt%, is generally prepared as the film formation solution.

As required, common additives, for example, a plasticizer of a polyvalent alcohol such as ethylene glycol, glycerin, polyethylene glycol, diethylene glycol or triethylene glycol, an anti-oxidation agent such as of a phenol or an amine, a stabilizer such as of a phosphate, a colorant, a fragrance agent, an extender, a defoaming agent, a release agent, a UV absorber, inorganic powder and a surfactant, may be blended in the PVA resin/water composition, as long as the effects of the present invention are not impaired. Further, a water-soluble resin, such as starch, carboxymethyl cellulose, methyl cellulose and hydroxymethyl cellulose, other than the PVA resin may be blended in the composition.

Then, the PVA film (unstretched PVA film) is formed from the film formation solution described above. A preferred film forming method is such that the PVA resin/water composition is supplied into an extruder and melted and kneaded, and then extruded into a film by a T-die method or an inflation method, and the film is dried.

In this method, the melt-kneading temperature in the extruder is preferably 50°C to 170°C, more preferably 55°C to 160°C. If the temperature is excessively low, the film texture is impaired. If the temperature is excessively high, the film is liable to be foamed. The film thus formed is preferably dried at a temperature of 70°C to 120°C, more preferably 80°C to 100°C.

In turn, the PVA film thus produced is biaxially stretched. Thus, the biaxially stretched PVA film for use in the present invention is provided.

In the biaxial stretching process, the stretching ratio in a machine direction (MD direction) is preferably 1.5 to 4.5, particularly preferably 2 to 4, and the stretching ratio in a transverse direction (TD direction) is preferably 1.5 to 4.5, particularly preferably 2.5 to 3.5. If the MD direction stretching ratio is excessively low, it is difficult to improve the physical properties by the stretching, and the film strength is liable to be reduced. If the MD direction stretching ratio is excessively high, the film is liable to be torn in the MD direction. If the TD direction stretching ratio is excessively low, it is difficult to improve the physical properties by the stretching, and the film strength is liable to be reduced. If the TD direction stretching ratio is excessively high, the film is liable to be frequently broken during the stretching in an industrial production process.

Where the sequential biaxial stretching process or the simultaneous biaxial stretching process is performed, the water content of the PVA film is preferably adjusted to 5 to 30 wt%, particularly preferably 10 to 25 wt%. The adjustment of the water content may be achieved by subsequently drying the undried PVA film, or by immersing a PVA film having a water content of less than 5 wt% in water or moisture-conditioning the PVA film. If the water content is excessively low or excessively high, it will be impossible to increase the MD direction stretching ratio and the TD direction stretching ratio.

After the biaxial stretching process, a heat treatment is preferably performed. The temperature for the heat treatment is preferably lower than the melting point of the PVA resin, particularly preferably 110°C to 250°C. If the heat treatment temperature is lower than the melting point by 80°C or more, the dimensional stability is liable to be impaired, resulting in a higher shrinkage percentage. On the other hand, if the heat treatment temperature is higher than the melting point, variations in film thickness is liable to be increased. The heat treatment period is preferably 1 to 30 seconds, more preferably 5 to 10 seconds.

In the present invention, where the laminate is used for the PTP, for example, the laminate should be improved in formability, i.e., in flexibility and conformability, for formation of pockets. Therefore, a two-stage heat treatment is preferably performed at relatively low temperatures in the following manner.

In the two-stage heat treatment, it is important that the first-stage heat treatment temperature is 110°C to 160°C, particularly preferably 120°C to 155°C, more preferably 130°C to 150°C, for the formability and the gas barrier property, and that the second-stage heat treatment temperature is 150°C to 200°C, particularly preferably 160°C to 195°C, more preferably 165°C to 190°C, for the formability and the gas barrier property. If the first-stage heat treatment temperature is excessively low, the gas barrier property is liable to be impaired. If the first-stage heat treatment temperature is excessively high, the formability is liable to be impaired. If the second-stage heat treatment temperature is excessively low, the film strength is liable to be reduced. If the second-stage heat treatment temperature is excessively high, the film is liable to be colored.

The second-stage heat treatment temperature is preferably higher than the first-stage heat treatment temperature by 5°C or more, particularly preferably by 10°C or more, more preferably by 20°C to 50°C.

In the two-stage heat treatment, the first-stage heat treatment period is preferably 1 to 30 seconds and the second-stage heat treatment period is preferably 1 to 30 seconds for the strength and the transparency of the film. The first-stage heat treatment period is more preferably 3 to 20 seconds, particularly preferably 5 to 15 seconds. The second-stage heat treatment period is more preferably 3 to 20 seconds, particularly preferably 5 to 15 seconds. If the first-stage heat treatment period is excessively short or excessively long, the film is liable to be non-uniform. If the second-stage heat treatment period is excessively short, the film is liable to have a reduced strength. If the second-stage heat treatment period is excessively long, the film is liable to be yellowed.

The two-stage heat treatment makes it possible to achieve the object of the present invention, but third-stage and subsequent heat treatment processes may be performed, as required, in the present invention.

The biaxially stretched PVA film may be brought into contact with water and dried, as required, for further reduction of thermal deformation. In the water contact step, the temperature of the water is generally 5°C to 60°C, preferably 10°C to 50°C. The water contact period may be properly selected according to the temperature of the water, but is industrially preferably 10 to 60 seconds.

The water contact step may be performed by immersing the PVA film in water, by spraying water to the PVA film, by coating the PVA film with water and/or by steaming the PVA film. These methods may be employed in combination. It is industrially preferred that, after the water contact step, the water is removed from the surface of the PVA film in a non-contact manner by air shower or the like, and then the remaining water is removed in a contact manner by a nip roller or the like. Exemplary driers include metal rolls and ceramic rolls which are brought into direct contact with the film for drying, and non-contact type driers.

Where the resulting biaxially stretched PVA film is wound up into a roll after the water contact/drying step, the film desirably has a water content of not higher than 3 wt%, preferably 0.1 to 2 wt%. If the water content is excessively high, portions of the rolled film are liable to intimately adhere to each other. Problematically, this may result in breakage of the film when the film is fed out of the roll.

Thus, the biaxially stretched PVA film is provided, which is advantageously used in the present invention.

A production method for the biaxially stretched EVOH film will be described.

The EVOH resin described above is prepared as a film formation material, and an EVOH film (unstretched EVOH film) is formed from the EVOH resin.

As long as the object of the present invention is not impaired, additives such as an anti-oxidation agent, a colorant, a UV absorber, a slip agent, an anti-static agent, a plasticizer, a cross-linking agent such a boric acid, an inorganic filler and an inorganic desiccant, resins such as a polyamide, a polyolefin and a highly water-absorptive resin, and the like may be blended in the film forming material other than the EVOH resin.

A melt forming method is mainly used for the formation of the EVOH film from the EVOH resin. The melt-forming method will hereinafter be described.

In the melt-forming method, a non-vent screw type extruder is generally employed, and the melt temperature for the extrusion for the film formation is 190°C to 250°C. A screw having a compression ratio of 2.0 to 4.5 is generally used, and a T-die or a round-die is used for the film formation.

The resulting EVOH film is biaxially stretched. Thus, the biaxially stretched EVOH film for use in the present invention is provided.

The biaxial stretching area ratio is preferably not less than 3, more preferably not less than 6, particularly preferably not less than 9, for the gas barrier property and the mechanical strength. Exemplary stretching methods include various known uniaxial or biaxial stretching methods such as a double bubble method, a tenter method and a roll method. The biaxial stretching method may be a simultaneous stretching method or a sequential stretching method.

Where the unstretched film is preliminarily allowed to contain water, the film can be easily continuously stretched. The unstretched film preferably has a water content of 2 to 30 wt%, particularly preferably 5 to 30 wt%, more preferably 10 to 30 wt%. If the water content is excessively low, stretch spots are liable to occur in the film. Particularly, where the film is stretched by means of the tenter, portions of the film adjacent to grips each have a higher stretching ratio and, therefore, are liable to be torn. On the other hand, if the water content is excessively high, a stretched portion of the film has a lower elastic modulus. With an insufficient difference in elastic modulus between the stretched portion and the unstretched portion of the film, stretch spots are liable to occur in the film.

The stretching temperature may vary depending on the water content of the unstretched film, but a generally applicable range of the stretching temperature is 50°C to 130°C. Particularly, where the simultaneous biaxial stretching process is performed at a temperature of 70°C to 100°C, the resulting biaxially stretched EVOH film is less liable to have thickness spots. On the other hand, where a longitudinal stretching step is performed at a temperature of 70°C to 100°C by means of the rolls and a transverse stretching step is performed at a temperature of 80°C to 120°C by means of the tenter in the sequential biaxial stretching process, the resulting biaxially stretched EVOH film is less liable to have thickness spots.

Further important factors for the production of the biaxially stretched EVOH film include a heat treatment to be performed after the stretching, and the density and the moisture content of the biaxially stretched EVOH film resulting from the heat treatment.

The heat treatment is preferably performed at a temperature lower than the melting point of the EVOH by 5°C to 40°C for 5 to 20 seconds. If the heat treatment temperature is excessively low, the heat treatment is insufficient, failing to impart the EVOH film with heat resistance and sufficient gas barrier property. On the other hand, if the heat treatment temperature is excessively high, the stretching effect of the EVOH film is liable to be partly impaired.

Thus, the biaxially stretched EVOH film to be advantageously used in the present invention is provided.

The stretched vinyl alcohol resin film (B) for use in the present invention generally has a thickness (Tb) of 10 to 70 µm, preferably 11 to 60 µm, particularly preferably 12 to 50 µm. If the thickness is excessively small, the gas barrier property is liable to be impaired. If the thickness is excessively large, the formability is liable to be impaired, and the cost benefit is liable to be reduced.

For formability, the stretched vinyl alcohol resin film (B) has a breaking elongation of not less than 20 %, more preferably not less than 40 %, as measured at 23°C at 50 %RH. The upper limit of the breaking elongation is generally 100 %. Here, the breaking elongation of the film is measured in conformity with JIS K7127 (1999).

For formability, the stretched vinyl alcohol resin film (B) has a breaking strength of not less than 250 MPa, more preferably not less than 270 MPa, as measured at 23°C at 50 %RH. The upper limit of the breaking strength is generally 350 MPa. Here, the breaking strength of the film is measured in conformity with JIS K7127 (1999).

Further, the stretched vinyl alcohol resin film (B) preferably has a total light transmittance of not less than 50 %, particularly preferably not less than 70 %, more preferably not less than 90 %, for visibility. The upper limit of the total light transmittance is generally 92 %. The total light transmittance of the film is measured in conformity with JIS K7361 with the use of a turbidity meter NDH2000 available from Nippon Denshoku Industries Co., Ltd.

The fluororesin film (C) for use in the present invention is a film made of a fluorine-containing resin and, for example, used as an outermost film for the PTP package and required to have a gas barrier property against water vapor and other gases. Specific examples of the fluororesin film (C) include films made of a tetrafluoroethylene-perfluoroalkyl vinyl ether copolymer (PFA), a polyvinylidene fluoride (PVDF), a polyvinyl fluoride (PVF), a polychlorotrifluoroethyelene (PCTFE), a polytetrafluoroethylene (PTFE), an ethylene-chlorotrifluoroethylene copolymer (ECTF) and an ethylene-tetrafluoroethylene copolymer (ETFE). For the gas barrier property against water vapor and other gases, it is particularly preferred to use the polychlorotrifluoroethyelene (PCTFE) film.

The fluororesin film (C) generally has a thickness (Tc) of 10 to 200 µm, preferably 13 to 180 µm, particularly preferably 15 to 160 µm. If the thickness is excessively small, the water vapor barrier property is liable to be impaired. If the thickness is excessively large, excessively high costs may result. In consideration of the cost benefit, the upper limit of the thickness is preferably about 100 µm.

The fluororesin film (C) preferably has a moisture permeability of not higher than 0.5 g/(m²·24hr·atm), more preferably not higher than 0.4 g/(m²·24hr·atm), as measure at 40°C at 90 %RH in consideration of the stability of packaged pills. If the moisture permeability is excessively high, the storage stability of the packaged pills is liable to be impaired. The lower limit of the moisture permeability is generally 0.01 g/(m²·24hr·atm).

In the present invention, the gas barrier laminate having the layered structure including the base film (A), the stretched vinyl alcohol resin film (B) and the fluororesin film (C) is produced, and the thickness ratio of these films is preferably as follows:

The thickness ratio (Tc/Tb) between the thickness (Tc) of the fluororesin film (C) and the thickness (Tb) of the stretched vinyl alcohol resin film (B) is preferably 0.5 to 5, particularly preferably 0.5 to 4, more preferably 0.6 to 3, further more preferably 0.7 to 2.5, for the water vapor barrier property. If the thickness ratio (Tc/Tb) is excessively small, the water vapor barrier effect is liable to be reduced. If the thickness ratio (Tc/Tb) is excessively large, the cost benefit is liable to be reduced.

The thickness ratio (Ta/Tb) between the thickness (Ta) of the base film (A) and the thickness (Tb) of the stretched vinyl alcohol resin film (B) is preferably 2 to 30, particularly preferably 3 to 25, more preferably 4 to 20, further more preferably 5 to 18. If the thickness ratio (Ta/Tb) is excessively small, tearing and cracking are liable to occur. If the thickness ratio (Ta/Tb) is excessively large, the laminate is liable to have an excessively high hardness, so that the resulting formed product fails to properly function. Further, the gas barrier property is liable to be impaired.

Further, the thickness ratio (Ta/Tc) between the thickness (Ta) of the base film (A) and the thickness (Tc) of the fluororesin film (C) is preferably 1 to 30, particularly preferably 2 to 25, more preferably 3 to 20, further more preferably 4 to 15. If the thickness ratio (Ta/Tc) is excessively small, tearing and cracking are liable to occur. If the thickness ratio (Ta/Tc) is excessively large, the laminate is liable to have an excessively high hardness, so that the resulting formed product fails to properly function. Further, the gas barrier property is liable to be impaired.

In the present invention, the laminate has the layered structure including the base film (A), the stretched vinyl alcohol resin film (B) and the fluororesin film (C), which may be sequentially stacked in this order. Alternatively, an adhesive layer, or a layer or a film of other resin may be provided between the three films or on the outermost film.

Exemplary adhesive agents to be used for bonding the films and/or layers include known adhesive agents such as of organic titanium compounds, isocyanate compounds and polyester compounds. For adhesiveness, it is particularly preferred to use an adhesive agent of a mixture of a polyester resin and a polyisocyanate resin. A method (dry laminating method) of laminating the films with the use of the adhesive agent is preferably employed.

The adhesive layer generally has a thickness of 0.3 to 8 µm, preferably 0.5 to 5 µm, particularly preferably 1 to 3 µm.

The bonding method may be such that: (1) the base film (A) and the stretched vinyl alcohol resin film (B) are first bonded together, and then the fluororesin film (C) is bonded to the resulting laminate; or (2) the stretched vinyl alcohol resin film (B) and the fluororesin film (C) are first bonded together, and then the base film (A) is bonded to the resulting laminate.

In the present invention, the laminate having the layered structure including the base film (A), the stretched vinyl alcohol resin film (B) and the fluororesin film (C) is thus provided.

In the present invention, the laminate has a moisture permeability of not higher than 0.5 g/(m²·24hr·atm), more preferably not higher than 0.4 g/ (m²·24hr·atm), particularly preferably not higher than 0.35 g/(m²·24hr·atm), as measure at 40°C at 90 %RH for the stability of the packaged pills. If the moisture permeability is excessively high, the storage stability of the packaged pills is liable to be impaired.

The laminate according to the present invention, which employs the stretched vinyl alcohol resin film as the intermediate layer to reduce the use amount of the very expensive fluororesin, is highly economical and excellent in gas barrier property against water vapor and other gases.

The laminate according to the present invention is useful for packages for pharmaceuticals, cosmetics and food, and is particularly useful for press-through pack (PTP) packages for packaging pills.

### EXAMPLES

The present invention will hereinafter be described more specifically by way of examples. It should be understood that the present invention be not limited to these examples without departing the scope of the present invention.

In the following examples, "parts" and "%" are based on weight.

The following films were prepared.

### [Base film (A)]

A hard polyvinyl chloride film (VSS-8142 type available from Sumitomo Bakelite Co., Ltd. and having a thickness of 230 µm)

### [Stretched vinyl alcohol resin film (B)]

### <Biaxially stretched PVA film (B1-1)>

A PVA (having an average polymerization degree of 1700, a 4% aqueous solution viscosity of 40 mPa·s (at 25°C), a saponification degree of 99.7 mol% and a sodium acetate content of 0.3 %) and water were supplied in a PVA/water weight ratio of 40/60 into a twin-screw extruder-kneader (having a screw L/D of 40) having a jacket temperature of 60°C to 150°C through a hopper of the extruder-kneader by means of metering pumps, and the resulting material was kneaded and fed out at a feed-out rate of 500 kg/hr.

Immediately, the fed-out material was pumped into a single-screw extruder (having a screw L/D of 30) and kneaded at 85°C to 140°C. Then, the material was flow-cast onto a cast roll cooled to 5°C through a T-die, and the resulting cooled film was removed from the cast roll and dried for 30 seconds by means of ten consecutive rotary heating rolls adjusted at 90°C. Thus, a PVA film (having a thickness of 150 µm) having a water content of 25 % was prepared. Subsequently, the PVA film was stretched at a stretching ratio of 3 in the MD direction by properly controlling the speed ratio of rolls, and then stretched at a stretching ratio of 3.5 in the TD direction by means of a tenter stretching machine. Then, the stretched PVA film was heat-treated at 175°C for 8 seconds (first-stage heat treatment) and further heat-treated at 210°C for 8 seconds (second-stage heat treatment). Thus, a biaxially stretched PVA film (B1-1) having a thickness of 30 µm was provided.

### <Biaxially stretched PVA films (B1-2 to B1-4)>

The following biaxially stretched PVA films having different thicknesses were produced in substantially the same manner as the biaxially stretched PVA film (B1-1).
(B1-2) 40-µm thick
(B1-3) 14-µm thick
(B1-4) 25-µm thick

### <Biaxially stretched PVA film (B2-1)>

A polyvinyl alcohol aqueous solution prepared by dissolving 40 parts of a polyvinyl alcohol (having an average saponification degree of 99.7 mol%, an average polymerization degree of 1700, a 4% aqueous solution viscosity of 40 mPa·s (at 25°C) and a sodium acetate content of 0.3 %) in 60 parts of water was supplied into a twin-screw extruder-kneader (having a screw L/D of 40) having a jacket temperature of 60°C to 150°C by means of a metering pump, and the resulting material was fed out at a feed-out rate of 500 kg/hr.

Immediately, the fed-out material was pumped into a single-screw extruder (having a screw L/D of 30) and kneaded at 85°C to 140°C. Then, the material was flow-cast onto a cast roll cooled to 5°C through a T-die, and the resulting cooled film was removed from the cast roll and dried for 30 seconds by means of ten consecutive rotary heating rolls adjusted at 90°C. Subsequently, the resulting polyvinyl alcohol film was stretched at a stretching ratio of 3 in the MD direction, and then stretched at a stretching ratio of 3.5 in the TD direction by means of a tenter stretching machine. Then, the resulting biaxially stretched PVA film was heat-treated at 145°C for 8 seconds (first-stage heat treatment) and further heat-treated at 180°C for 8 seconds (second-stage heat treatment). Thus, a biaxially stretched PVA film (B2-1) having a thickness of 30 µm was provided, which was subjected to the two-stage lower-temperature heat treatment as having a water content of 0.8 %.

### [Fluororesin film (C)]

(C1-1) A PCTFE film DF-0025C1 available from Daikin Industries Ltd. and having a thickness of 23 µm (C1-2) A PCTFE film DF-0050C1 available from Daikin Industries Ltd. and having a thickness of 51 µm

### <Example 1>

### [Production of laminate]

The biaxially stretched PVA film (B1-1) and the PCTFE film (C1-1) were bonded together at 70°C with a polyester/polyisocyanate two-component liquid adhesive agent (DIC's DICDRY LX-703VL/DIC's DICDRY KR-90 = 15/1 (weight ratio)), and then the hard polyvinyl chloride film (A) was bonded to an exposed surface of the biaxially stretched PVA film at 70°C. Then, the resulting product was aged at 40°C for two days. Thus, a laminate was produced.

The laminate thus produced was evaluated in the following manner.

### (Moisture permeability)

With the use of a moisture permeable cup specified in JIS Z0208, the moisture permeability (g/(m²·24hr·atm)) was measured at 40°C at 90 %RH in conformity with JIS Z0208.

### <Example 2>

A laminate was prepared in substantially the same manner as in Example 1, except that the biaxially stretched PVA film (B1-2) was used as the stretched vinyl alcohol resin film (B), and evaluated in the same manner as in Example 1.

### <Example 3>

A laminate was prepared in substantially the same manner as in Example 1, except that the biaxially stretched PVA film (B2-1) was used as the stretched vinyl alcohol resin film (B), and evaluated in the same manner as in Example 1. The formability of the laminate was evaluated in the following manner.

### (Formability)

With the use of a blister packing machine PF-D1 (PTP packaging machine available from Maruho Hatsujo Kogyo K.K.), a PTP packaging process was performed at a heating temperature of 130°C to 160°C at a packaging rate of 30 to 40 shots /minute. As a result, packages were produced as having a designed shape.

### <Comparative Example 1>

A laminate was prepared in substantially the same manner as in Example 1, except that the biaxially stretched PVA film (B1-1) was not used, and evaluated in the same manner as in Example 1.

### <Example 4>

A laminate was prepared in substantially the same manner as in Example 1, except that the biaxially stretched PVA film (B1-3) was used as the stretched vinyl alcohol resin film (B) and the PCTFE film (C1-2) was used as the fluororesin film (C), and evaluated in the same manner as in Example 1.

### <Example 5>

A laminate was prepared in substantially the same manner as in Example 1, except that the biaxially stretched PVA film (B1-4) was used as the stretched vinyl alcohol resin film (B) and the PCTFE film (C1-2) was used as the fluororesin film (C), and evaluated in the same manner as in Example 1.

### <Comparative Example 2>

A laminate was prepared in substantially the same manner as in Example 4, except that the biaxially stretched PVA film (B1-3) was not used, and evaluated in the same manner as in Example 1.

The results for Examples and Comparative Examples are shown in Tables 1 and 2.

**Table 1**

| | Example 1 | Example 2 | Example 3 | Comparative Example 1 |
|---|---|---|---|---|
| Base film (A) | Hard polyvinyl chloride film | | | |
| (Thickness (µm)) | (230) | | | |
| Stretched vinyl alcohol resin film (B) | B1-1 | B1-2 | B2-1 | - |
| (Thickness (µm) ) | (30) | (40) | (30) | |
| Fluororesin film (C) | PCTFE film C1-1 | | | |
| (Thickness (µm)) | (23) | | | |
| Moisture permeability (g/ (m²·24hr·atm)) | 0.20 | 0.17 | 0.20 | 0.36 |

**Table 2**

| | Example 4 | Example 5 | Comparative Example 2 |
|---|---|---|---|
| Base film (A) | Hard polyvinyl chloride film | | |
| (Thickness (µm)) | (230) | | |
| Stretched vinyl alcohol resin film (B) | B1-3 | B1-4 | - |
| (Thickness (µm)) | (14) | (25) | |
| Fluororesin film (C) | PCTFE film C1-2 | | |
| (Thickness (µm)) | (51) | | |
| Moisture permeability (g/ (m²·24hr·atm)) | 0.16 | 0.09 | 0.20 |

As described above, the laminates of Examples 1 and 2, in which the stretched vinyl alcohol resin film (B) was employed as the intermediate layer and the expensive fluororesin film (C) had a smaller thickness, each had a lower moisture permeability and were excellent in water vapor barrier property, and hence enjoyed the economic benefit. The laminates of Examples 4 and 5, in which the fluororesin film (C) had a conventional thickness, each had a further lower moisture permeability and were better in water vapor barrier property. Further, the laminate of Example 3, in which the biaxially stretched PVA film subjected to the two-stage lower-temperature heat treatment at relatively lower temperatures was employed, was excellent in water vapor barrier property as in Examples 1 and 2 and, in addition, excellent in formability. Therefore, the PTP was efficiently produced from the laminate of Example 3.

On the other hand, the laminate of Comparative Example 1, in which the stretched vinyl alcohol resin film (B) was not used as the intermediate layer, was inferior in water vapor barrier property to the laminates of Examples. Further, Comparative Example 2, in which the stretched vinyl alcohol resin (B) was not used as in Comparative Example 1, indicates that the expensive fluororesin film (C) should have a conventional thickness in order to provide an excellent water vapor barrier property.

While specific forms of the embodiment of the present invention have been shown in the aforementioned inventive examples, the inventive examples are merely illustrative of the invention but not limitative of the invention. It is contemplated that various modifications apparent to those skilled in the art could be made within the scope of the invention.

The inventive laminate has the layered structure including the base film (A), the stretched vinyl alcohol resin film (B) and the fluororesin film (C). Further, the stretched vinyl alcohol resin film (B) is employed as the intermediate layer. Therefore, the use amount of the very expensive fluororesin can be reduced. Thus, the laminate is highly economical, and excellent in gas barrier property against water vapor and other gases. The laminate is useful for a packaging material for pharmaceuticals, cosmetics and food, and particularly useful for press-through pack (PTP) packages for packaging pills.

## Claims

1. A laminate having a layered structure comprising: (A) a base film; (B) a stretched vinyl alcohol resin film; and (C) a fluororesin film.

2. The laminate according to claim 1, wherein the base film (A) is a polyvinyl chloride film.

3. The laminate according to claim 1 or 2, wherein the stretched vinyl alcohol resin film (B) is a biaxially stretched vinyl alcohol resin film.

4. The laminate according to any one of claims 1 to 3, wherein the stretched vinyl alcohol resin film (B) is a biaxially stretched polyvinyl alcohol resin film.

5. The laminate according to any one of claims 1 to 4, wherein the fluororesin film (C) is a polychlorotrifluoroethylene film.

6. The laminate according to any one of claims 1 to 5,
wherein the base film (A) has a thickness (Ta) of 50 to 400 µm,
wherein the stretched vinyl alcohol resin film (B) has a thickness (Tb) of 10 to 70 µm,
wherein the fluororesin film (C) has a thickness (Tc) of 10 to 200 µm.

7. The laminate according to any one of claims 1 to 6, wherein a thickness ratio (Tc/Tb) between the thickness (Tc) of the fluororesin film (C) and the thickness (Tb) of the stretched vinyl alcohol resin film (B) is 0.5 to 5.

8. A packaging material comprising the laminate according to any one of claims 1 to 7.

9. A press-through pack comprising the laminate according to any one of claims 1 to 7.
